Europäisches Patentamt

European Patent Office

Office européen des brevets

Veröffentlichungsnummer: **0 285 982**

**A2**

## EUROPÄISCHE PATENTANMELDUNG

Anmeldenummer: 88105050.4

Anmeldetag: 29.03.88

Int. Cl.⁴ **B29C 47/58** , **B29C 31/04**

Priorität: 09.04.87 IT 2005787

Veröffentlichungstag der Anmeldung:
12.10.88 Patentblatt 88/41

Benannte Vertragsstaaten:
**BE DE ES FR GB NL SE**

Anmelder: **BAYER AG**
**Konzernverwaltung RP Patentabteilung**
**D-5090 Leverkusen 1 Bayerwerk(DE)**

Erfinder: **Bechlenberg, Karl-Theo, Dipl.-Ing.**
**Via-Dante Allighieri 6 b**
**I-Almeno S.B.(IT)**
Erfinder: **Walter, Oskar, Dipl.-Ing.**
**Buscher Holzweg 16**
**D-4150 Krefeld 1(DE)**
Erfinder: **Uerdingen, Walter, Dr.**
**Humperdinck-Strasse 41**
**D-5090 Leverkusen 1(DE)**

Verfahren und Vorrichtung zum Herstellen eines Formteils aus einer faserhaltigen, duroplastischen Formmasse.

Um Formteilen aus faserhaltigen. duroplastischen Formmassen optimale mechanische Festigkeitseigenschaften zu verleihen, legt man mittels einer Strangpresse (31) die vorzugsweise vorgewärmte Formmasse in Form eines Stranges (54) auf dem Boden (55) eines Formhohlraumes (56) eines Preßformwerkzeuges (33) ab, wozu die Düse (36) und oder das Preßformwerkzeug (33) in x-und y-Richtung sowie gegebenenfalls in z-Richtung bewegbar und vorzugsweise außerdem noch schwenkbar sind. damit die Achsrichtung des Stranges (54) und damit die Achsrichtung der in der Formmasse enthaltenen Fasern beim Ablegen jeweils auf die örtlichen Festigkeitserfordernisse des zu fertigenden Formteils abgestimmt wird.

FIG. 1

## Verfahren und Vorrichtung zum Herstellen eines Formteils aus einer faserhaltigen, duroplastischen Formmasse

Die Erfindung richtet sich auf ein Verfahren und eine Vorrichtung zum Herstellen eines Formteils aus einer faserhaltigen, duroplastischen Formmasse, wobei die Formmasse mittels einer Düse in den Formhohlraum eines Preßformwerkzeuges eingebracht wird und in der Düse die in der Formmasse enthaltenen Fasern in Strömungsrichtung ausgerichtet werden, die Formmasse verpreßt und zum Formteil ausgehärtet wird.

Es ist bekannt, faserhaltige duroplastische Formmassen, wie Sheet-moulding-compounds, Bulk-moulding-compounds, oder Thick-moulding-compounds, in beheizte Formwerkzeuge einzubringen, durch Pressen zu verformen und aushärten zu lassen. Insbesondere bei der Verwendung von Sheet-moulding-compounds ergeben sich relativ gute Festigkeitseigenschaften. Diese Eigenschaften könnten noch erhöht werden, wenn eine bessere Orientierung der in der Formmasse enthaltenen Verstärkungsfasern möglich wäre. Nachteilig bei diesem Verfahren ist die aufwendige Handhabung sowie die relativ lange Preß-und Aushärtezeit, wodurch die Wirtschaftlichkeit dieses Verfahrens nicht immer gegeben ist.

Weiterhin ist es bekannt, in Anlehnung an das für Thermoplaste bekannte Spritzgießverfahren duroplastische Formmassen unter Druck in das vorgewärmte Formwerkzeug einzuspritzen und dort auszuhärten. Dieses Verfahren ist zwar rationeller; jedoch liegt die mechanische Festigkeit der so hergestellten Formteile noch erheblich unter dem Niveau der im Preßverfahren hergestellten Formteile, weil die Verstärkungsfasern sich bei der Verteilung der Formmasse zu willkürlich ausrichten.

Es besteht die Aufgabe, ein Verfahren und eine Vorrichtung zu schaffen, womit Formteile aus duroplastischen Formmassen rationell und mit verbesserten mechanischen Festigkeitseigenschaften herstellbar sind.

Gelöst wird diese Aufgabe dadurch, daß die Formmasse als Strang bzw. in Form von Strangabschnitten auf dem Boden des Formhohlraumes plaziert wird, und zwar, indem die Achsrichtung des Stranges bzw. der Strangabschnitte beim Ablegen jeweils auf die örtlichen Festigkeitserfordernisse des herzustellenden Formteils abgestimmt wird.

Dadurch wird erreicht, daß die Fasern infolge des strangförmigen Einbringens der faserhaltigen Formmasse in den Formhohlraum beim Ausstoßen aus der Düse der Strangpresse in Strömungsrichtung orientiert sind.

Durch geeignete Bewegungsabläufe der Düse gelingt es, die Stränge bzw. Strangabschnitte lokal richtungsmäßig so abzulegen, daß jeder beliebigen Stelle des Formteils spezielle Festigkeitseigenschaften in bezug auf die dort lokal zu erwartenden Krafteinleitungen verliehen werden können. Das heißt, durch entsprechende Strangablage lassen sich in allen Bereichen des Formteils optimale mechanische Festigkeitseigenschaften erzielen. Es versteht sich, daß beim anschließenden Preßvorgang noch eine geringfügige Nachorientierung stattfindet. Diese ist aber vernachlässigbar bzw. kann durch entsprechende Ausrichtung des Stranges beim Ablegen von vornherein kompensiert werden. Durch entsprechende Abstimmung von Auspreßgeschwindigkeit der Formmasse und Bewegungsgeschwindigkeit und -richtung von Düse bzw. Preßformwerkzeug läßt sich sogar stellenweise eine schräge bis vertikale Ausrichtung des Stranges bzw. von Strangabschnitten erreichen.

Besonders vorteilhaft ist es, die Stränge in mehreren Schichten übereinander abzulegen, wobei die Stränge benachbarter Schichten sich vorzugsweise kreuzen.

Dieser sperrholzartige Aufbau des Formteils ergibt besonders hohe mechanische Festigkeiten.

Gemäß einer weiteren besonderen Ausführungsform des neuen Verfahrens wird das Einbringen der Formmasse in den Formhohlraum programmgesteuert.

Bei einfachen Formteilen ist zwar auch eine Steuerung von Hand prinzipiell möglich; für größere Serien bietet sich jedoch - trotz des größeren maschinellen Aufwandes - aus Gründen der Rationalisierung und der exakten Reproduzierbarkeit der Festigkeitseigenschaften in diesem Formteil die Programmsteuerung an.

Vorzugsweise wird die Formmasse vor dem Einbringen in den Formhohlraum vorgewärmt.

Gegenüber dem bisherigen Verfahren, wobei die Formmasse die Wärme erst im Formhohlraum aufnehmen mußte, wird dadurch eine erheblich geringere Zykluszeit erzielt. Es ist vorteilhaft, die Vorwärmtemperatur der Formmasse im Bereich von 30 bis 100°C, vorzugsweise im Bereich von 60 bis 80°C, zu wählen.

Besonders geeignet für das neue Verfahren sind Formteile mit einem Harzanteil von 20 bis 50 Gew.-%, einem Faseranteil von 5 bis 40 Gew.-% sowie einem Füllstoffanteil von 0 bis 80 Gew.-%.

Obwohl dem Prinzip nach jede Art von Fasern, welche die erforderlichen Eigenschaften besitzen, verwendbar ist, werden insbesondere und überwiegend Glasfasern eingesetzt, ebenso wie bei dem bisher bekannten Verfahren. Die verwendeten Glasfasern haben üblicherweise eine Länge von 3 bis 50 mm und 10 bis 20 micron Durchmesser.

Speziell die Schlagzähigkeit und die Bruchdehnung sind von der Orientierung der Fasern weitgehend abhängig.

In Faserlängsrichtung sind die Festigkeiten bedeutend höher als quer zur Faserrichtung. Möglichst homogene Verteilung und gezielte Orientierung der Fasern an bestimmten Stellen, abgestimmt auf die jeweils zu erwartende Belastungsart, ergeben unter Benutzung des neuen Verfahrens Formteile von optimalen mechanischen Festigkeitseigenschaften.

Die neue Vorrichtung zum Herstellen eines Formteils aus einer faserhaltigen, duroplastischen Formmasse geht aus von einer Strangpresse, deren Düse über den Formhohlraum eines Preßformwerkzeuges plazierbar ist.

Das Neue ist darin zu sehen, daß die Düse und oder das Preßformwerkzeug bezüglich des Bereiches des Formhohlraumes relativ zueinander horizontal bewegbar sind ist.

Unter dem Begriff "Strangpresse" ist hierbei jegliche Art geeigneter Preßvorrichtungen zu verstehen, mit welchen es möglich ist, einen Strang durch eine Düse auszupressen. Es ist selbstverständlich, daß sich nicht die Düse mit ihrer Austrittsöffnung allein zu bewegen braucht, sondern auch der Düse vorgeordnete Teile, wie z.B. der Einspritzzylinder, oder die gesamte Strangpresse einschließlich Antriebsaggregat können je nach Konstruktion mitbewegbar sein. Ähnliches gilt für das Preßformwerkzeug, wenn dieses bewegbar sein soll. Beispielsweise läßt sich die untere Formwerkzeughälfte innerhalb einer Formpresse bewegbar anordnen oder auch die gesamte Formpresse ist bewegbar. Durch diese Bewegbarkeit läßt sich die Fläche des Formhohlraumes mit der Düse abfahren und der Strang bzw. Strangabschnitte beispielsweise zeilenförmig nebeneinander ablegen. Bei gleichzeitigem Abfahren in x-Richtung und in y-Richtung erzielt man ein Ablegen in schräger Richtung in horizontaler Ebene. Es ist möglich, nur die Düse, gegebenenfalls mit vorgeordneten Aggregaten, verfahrbar zu gestalten oder nur das Preßformwerkzeug, gegebenenfalls mit einer Formpresse. Günstig ist es auch beispielsweise, die Düse in x-Richtung verfahrbar zu gestalten und das Preßformwerkzeug in y-Richtung. Es versteht sich von selbst, daß zum Schließen des Formwerkzeuges die Düse aus dessen Bereich herausgefahren werden muß.

Gemäß einer besonderen Ausführungsform sind ist die Düse und oder das Preßformwerkzeug zusätzlich relativ zueinander vertikal bewegbar.

Diese Ausführungsform ist besonders günstig, wenn der Formhohlraum sphärisch gestaltet ist, um die räumlichen Konturen abfahren zu können. Durch lokale Vertikalbewegung läßt sich aber auch eine Materialanhäufung mit vertikal oder zumindest annähernd vertikal orientierten Fasern erhalten.

Vorzugsweise ist die Düse mit einem austauschbaren Mundstück versehen.

Dadurch wird die Möglichkeit eröffnet, Mundstücke mit unterschiedlich geformten Austrittsöffnungen und oder unterschiedlicher Größe zu verwenden. Das heißt, mittels austauschbarer Mundstücke dieser Art läßt sich die Vorrichtung an die Erfordernisse der Geometrie des Formhohlraumes anpassen. Auch Ausstoßmenge, Ausstoßgeschwindigkeit und Ausstoßdruck lassen sich dadurch beeinflussen. Beispielsweise bietet ein Mundstück, dessen Austrittsöffnung rechteckig ist, den Vorteil, daß sich bei exaktem Aneinanderlegen der Stränge in Zeilenform Lufteinschlüsse vermeiden lassen.

Gemäß einer weiteren besonderen Ausführungsform ist die Düse schwenkbar gelagert.

Dies hat den Vorteil, daß der Strang bei entsprechender Stellung der Düse beispielsweise sehr flach aus dem Mundstück ausgetragen werden kann, also beim Ablegen kaum noch eine Umlenkung erfährt. Mittels der Schwenkbewegung läßt sich der Strang beim Ablegen auch örtlich strecken oder stauchen, indem diese Schwenkbewegung der longitudinalen Bewegung überlagert wird. Die meisten Möglichkeiten bietet eine als Kugel in einer Pfanne gelagerte Düse, weil sie um nahezu 180° in allen Richtungen schwenkbar ist.

Ist die Vorrichtung vorzugsweise mit einem Programmsteuergerät versehen, so lassen sich aus der Robotertechnik oder Verspanungsmaschinentechnik bekannte Bewegungsmechanismen dem Prinzip nach in vorteilhafter Weise verwenden. Mittels des Programmsteuergerätes läßt sich je nach vorgegebenem Programm jede mit dem gewählten Bewegungsmechanismus mögliche Fahrweise zum Füllen des Formhohlraumes durchführen.

Vorzugsweise ist der Spritzzylinder mit einer Temperiervorrichtung versehen.

Durch das Vorheizen der Formmasse verringern sich die Formstandzeiten, weil die Formmasse nicht mehr im Formwerkzeug selbst aufgewärmt werden muß.

Als Strangpressen lassen sich beispielsweise Einwellenextruder, gleichsinnig oder gegensinnig drehende Doppelwellenextruder, Ko-Kneter sowie ähnliche zur Compoundierung bzw. Direktcompoundierung geeignete Anlagen verwenden. Strangpressen mit Preßkolben sind ebenso geeignet.

Eine besonders vorteilhafte Ausführungsform der Vorrichtung besteht darin, daß der Spritzzylinder aus einer austauschbaren und nachfüllbaren Kartusche besteht.

In diesem Falle ist es möglich, die Formmasse in einem besonderen Behälter vorzuwärmen und in dosierter Menge in die Kartuschen abzufüllen. welche dann zyklisch in die Stranpresse zum Auspressen bzw. Formfüllen eingelegt werden. Um Wärmeverluste zu vermeiden. sind die Kartuschen wärmeisoliert oder sogar beheizbar. In vorteilhafter Weise sind die Kartuschen mit einem Absperrventil versehen damit die Formmasse beim Handhaben nicht unkontrolliert auslaufen kann.

In der Regel ist es möglich nur eine Kartusche zu verwenden. denn sie läßt sich in jener Zeit nachfüllen. welche das Formteil zum Aushärten benötigt. Es ist aber auch wechselseitiger Betrieb mit mehreren Kartuschen für ein oder mehrere Preßwerkzeuge möglich. Die Dosiereinheit läßt sich so gestalten. daß gleichzeitig oder wechselseitig mehrere Kartuschen gefüllt werden können.

In der Zeichnung ist die neue Vorrichtung in einem Ausführungsbeispiel rein schematisch dargestellt und nachstehend näher erläutert. Es zeigen:

     Fig. 1 eine erste Ausführungsform der Vorrichtung in der Seitenansicht und

     Fig. 2 eine zweite Ausführungsform der Vorrichtung in der Seitenansicht.

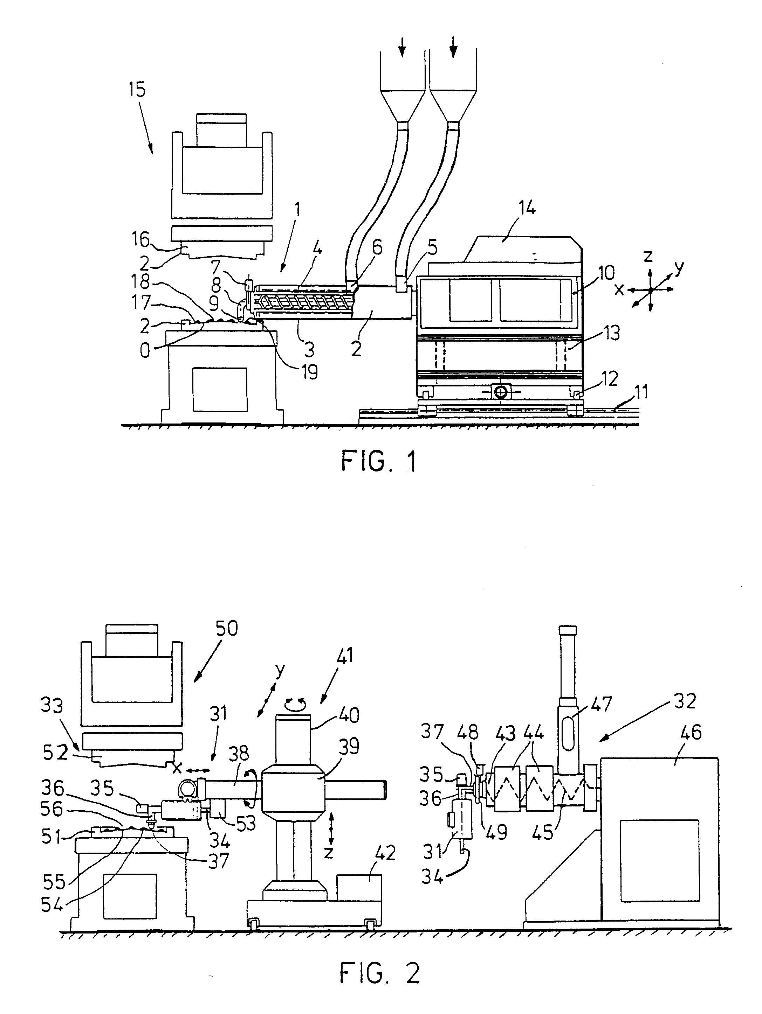

In Fig. 1 besteht die Vorrichtung aus einer Strangpresse 1 und einem Pressformwerkzeug 2.

Die Strangpresse 1 wiederum besteht aus einem Einwellenextruder. dessen Spritzzylinder 3 mit Heizelementen 4 bestückt ist. In ihn münden eine Zuführung 5 für Harzansatz und eine Zuführung 6 für Glasfasern. Der Einwellenextruder 1 weist an einem Ende einen Absperrzylinder 7 und eine Düse 8 mit Mundstück 9 auf. An seinem anderen Ende ist er mit einem Antriebsaggregat 10 verbunden. welches mittels Führungen 11, 12, 13 in x-, y- und z-Richtung verfahrbar ist. An dem Antriebsaggregat 10 ist ein Programmsteuergerät 14 angeordnet.

Das Preßformwerkzeug 2 ist in einer Formpresse 15 gelagert. Diese ist so weit auseinanderfahrbar. daß der Einwellenextruder 1 mit seiner Düse 8 zwischen die beiden Formwerkzeughälften 16. 17 einfahren und den gesamten Formhohlraum 18 abfahren kann. Mittels der Düse 8 läßt sich entsprechend den vorgegebenen Programm der aus dem Mundstück 9 austretende Strang 19 zeilenförmig ablegen. wobei sich durch Bewegen des Einwellenextruders 1 in vertikaler Richtung der Abstand des Mundstückes 9 vom Boden 20 des Formhohlraumes 18 beispielsweise konstant halten läßt.

In Fig. 2 besteht die Vorrichtung aus einer Strangpresse 31, einer Dosiereinheit 32 sowie einem Preßformwerkzeug 33.

Die Strangpresse 31 ist hier als Kartusche 31 ausgebildet. welche mittels eines Kolbens 34 entleerbar ist. Ihr ist ein Absperrventil 35 und eine Düse 36 mit Mundstück 37 zugeordnet. Die Kartusche 31 ist an einem Greifarm 38 gehalten. welcher - um seine Achse schwenkbar und in x-Richtung verfahrbar - mittels einer Halterung 39 an einer - schwenkbaren Säule 41 gelagert ist. Die Halterung 39 ist senkrecht (in z-Richtung) verfahrbar. Außerdem ist die gesamte Säule 40 quer (in y-Richtung) verfahrbar. Dieser gesamte Bewegungsmechanismus 41 zum Bewegen der Düse 36 wird von einem Programmsteuergerät 42 betätigt. Mittels dieses Programmsteuergerätes 42 wird auch durch Schwenken der Säule 40, mittels des Greifarmes 38 die Kartusche 31. sobald sie leer ist. zur Dosiereinheit 32 transferiert. Diese besteht aus einem Spritzzylinder 43. welcher mit Heizelementen 44 versehen it und eine Stopfschnecke 45 enthält. welche mit einem Antrieb 46 betätigt wird. Ein Beschickungsdom ist mit 47 bezeichnet. Der Spritzzylinder 43 ist mit zwei Absperrventilen 48 (nur eines ist sichtbar. das zweite liegt verdeckt dahinter) sowie mit zwei elektromagnetischen Kupplungen 49 (von denen ebenfalls nur eine sichtbar ist) zum Anflanschen der Kartuschen 31 versehen. Dabei ragt das Mundstück 37 der Kartusche 31 in die Kupplung 49 hinein. so daß das Einbringen einer bemessenen Menge vorgewärmter Formmasse in die Kartusche 31 durch deren Mundstück 37 erfolgt. Währenddessen ist das zweite (nicht sichtbare) Absperrventil 48 verschlossen. Das Preßformwerkzeug 33 besteht aus zwei in einer Formpresse 50 angeordneten Formwerkzeughälften 51. 52. Ein Hydraulikantrieb 53 preßt mittels des Kolbens 34 die Formmasse bei geöffnetem Absperrventil 35 durch die Düse 36 bzw. das Mundstück 37. Sie tritt als Strang 54 aus und wird zeilenförmig auf dem Boden 55 des Preßformwerkzesuges 56 abgelegt.

Verfahrensbeispiel:

Verwendet wird die Vorrichtung in der Ausführungsform gemäß Fig. 2. Im Spritzzylinder 43 wird eine Mischung aus 30 Gew.-% Polyesterharz, 40 Gew.-% Glasfasern und 30 Gew.-% Füllstoff auf 80°C vorgewärmt. Die Glasfasern besitzen eine Länge von etwa 40 mm bei etwa 15 micron Durchmesser. Beide Kartuschen 31 sind an der Kupplung 49 angeflanscht. Nachdem die Formmasse auf die gewünschte Temperatur gebracht worden ist. wird eines der Absperrventile 48 geöffnet und die faserhaltige Formmasse in der einer Formfüllung entsprechenden Menge durch das Mundstück 37 der Düse 36 in die Kartusche 31 gedrückt. wobei der Kolben 34 zurückgedrückt wird. Nach der Füllung werden die Absperrventile 35. 48 geschlossen. Der Greifarm 38 erfaßt nun die Kartusche 31 und transferiert sie über den Formhohlraum 56, nachdem die Kupplung 49 gelöst worden ist. Nunmehr wird das Absperrventil 35 geöffnet und der hydraulische Antrieb 53 schiebt den Kolben 34 vor, wodurch die Formmasse durch das Mundstück 37 in Form eines Stranges 54 ausgepreßt und auf dem Boden 55 des Formhohlraumes 56 abgelegt wird, und zwar entsprechend der Vorschubsteuerung in x-, y-und z-Richtung, sowie durch Schwenkbewegung des Greifarmes 38 und damit der Düse 36 bzw. des Mundstückes 37. Dabei wird der Strang 54 jeweils lokal derart abgelegt, daß an jeder Stelle die für die lokale Beanspruchungsart optimale mechanische Festigkeit erreicht wird. Nach dem Entleeren wird die Kartusche 31 zurückgeschwenkt und an die freie Kupplung 49 der Dosiereinheit 32 angeflanscht und erneut gefüllt. Zwischenzeitlich schließt die Formpresse 50 das Preßformwerkzeug 33 und das Formteil härtet aus. Nach der Entnahme des Formteils erfaßt der Greifarm 38 die zweite inzwischen bereits gefüllte Kartusche 31 und transferiert sie über den Formhohlraum 56, usw. Im Dauerbetrieb sind die beiden Kartuschen 31 also wechselseitig in Füll-und Entleerungsposition.

## Ansprüche

1. Verfahren zum Herstellen eines Formteils aus einer faserhaltigen, duroplastischen Formmasse, wobei die Formmasse mittels einer Düse (8, 36) in den Formhohlraum (18, 56) eines Preßformwerkzeuges (2, 33) eingebracht wird und in der Düse (8, 36) die in der Formmasse enthaltenen Fasern in Strömungsrichtung ausgerichtet werden, die Formmasse verpreßt und zum Formteil ausgehärtet wird, dadurch gekennzeichnet, daß die Formmasse als Strang (19, 54) bzw. in Form von Strangabschnitten auf dem Boden (20, 55) des Formhohlraumes (18, 56) plaziert wird, und zwar, indem die Achsrichtung des Stranges (19, 54) bzw. der Strangabschnitte beim Ablegen jeweils auf die örtlichen Festigkeitserfordernisse des zu fertigenden Formteils abgestimmt wird.

2. Verfahren nach Anspruch 1, dadurch gekennzeichnet, daß die Stränge (19, 54) in mehreren Schichten übereinander, sich vorzugsweise kreuzend, abgelegt werden.

3. Verfahren nach Anspruch 1 oder 2, dadurch gekennzeichnet, daß das Einbringen der Formmasse in den Formhohlraum (18, 56) programmgesteuert wird.

4. Verfahren nach einem der Ansprüche 1 bis 3, dadurch gekennzeichnet, daß die Formmasse vor dem Einbringen in dem Formhohlraum (18, 56) vorgewärmt wird.

5. Vorrichtung zum Herstellen eines Formteils aus einer faserhaltigen, duroplastischen Formmasse, bestehend aus einer Strangpresse (1, 31), deren Düse (8, 36) über den Formhohlraum (18, 56) eines Preßformwerkzeuges (2, 33) plazierbar ist, dadurch gekennzeichnet, daß die Düse (8, 36) und/oder das Preßformwerkzeug (2, 33) bezüglich des Bereiches des Formhohlraumes (18, 56) relativ zueinander horizontal bewegbar sind/ist.

6. Vorrichtung nach Anspruch 5, dadurch gekennzeichnet, daß die Düse (8, 36) und/oder das Preßformwerkzeug (2, 33) zusätzlich relativ zueinander vertikal bewegbar sind/ist.

7. Vorrichtung nach Anspruch 5 oder 6, dadurch gekennzeichnet, daß die Düse (36) schwenkbar gelagert ist.

8. Vorrichtung nach einem der Ansprüche 5 bis 7, dadurch gekennzeichnet, daß die Düse (8, 36) mit einem austauschbaren Mundstück (9, 37) versehen ist.

9. Vorrichtung nach einem der Ansprüche 5 bis 8, gekennzeichnet durch ein Programmsteuergerät (14, 42).

10. Vorrichtung nach einem der Ansprüche 5 bis 9, dadurch gekennzeichnet, daß der Spritzzylinder (3) mit Heizelementen (4) versehen ist.

11. Vorrichtung nach einem der Ansprüche 5 bis 10, dadurch gekennzeichnet, daß die Strangpresse (31) aus einer austauschbaren und nachfüllbaren Kartusche (31) besteht.

**FIG. 1**

**FIG. 2**